# EUROPEAN PATENT APPLICATION

(11) **EP 0 718 728 A1**
(43) Date of publication of application: **26.06.1996**
(21) Application number: 95203506.1
(22) Date of filing: 15.12.1995
(51) Int. Cl.: G05B 19/042

(54) **Device for controlling at least one actuator, operatively connectable to a flexible programming station**

(30) Priority: 23.12.1994 IT MI942629
(71) Applicant: LOMAR s.r.l., I-25020 Flero, Brescia (IT)
(72) Inventor: Loda, Giuseppe, I-25125 Brescia (IT)
(74) Representative: Marchi, Massimo

(57) **Abstract**

A device for controlling the process (1) of at least one actuator, operatively connectable to a flexible programming station (2), comprises a central microprocessor unit (CPU) (5), at least one first programmable and erasable memory unit (8), updatable during operations, and a second permanent memory unit (6), both operatively connected to the central microprocessor unit (5). The second memory unit (6) contains only a communication program capable of establishing a communication procedure between the device (1) and the programming station (2) so that in the first memory unit (8) a main control program in machine language generated in said programming station (2) to command the operation of at least one driver (11, 11A-11E) of an actuator is memorized.

## Description

The present invention relates to a device for controlling at least one actuator, operatively connectable to a flexible programming station.

Programmable controllers are known comprising resident softwares which represent a limitation for their updating.

The object of the present invention is a microprocessor control device containing a machine language program for controlling actuators where said machine language program can be changed, updated and amplified at any time according to needs by changing, updating and amplifying a set of instructions that allows of building said program, without any limitation due to hardware or softwares resident in said microprocessor control device.

Such objects are achieved, according to the invention, by a device for controlling at least one actuator, operatively connectable to a flexible programming station, comprising
- a central microprocessor unit (CPU),
- a two-way communications interface and
- at least one driver capable of driving at least one actuator, operatively connected to said central microprocessor unit,
- at least one first programmable and erasable memory unit, updatable during operations, and
- a second permanent memory unit, operatively connected to said central microprocessor unit,
- said interface being capable of receiving a main control program and memorization instructions, both generated by said programming station in machine language, said main control program being compiled in said programming station to instruct said driver of said actuator to execute a predetermined operative sequence, said memorization instructions being transmitted to said interface to write in said first memory unit said main control program in machine language,
   characterized in that
- in said second permanent memory unit there is memorized only a communication program capable of establishing a communication procedure between said device and said programming station.

The main advantage of the microprocessor control device according to the invention is that a set of instructions, that allows to build said machine language program, is completly updatable and customizable upon request since the one and only software resident in the microprocesssor device is a communication program.

With the device according to the invention the limitations of the known controllers which are due to the hardware or other resident softwares are overcome since the program for controlling the actuators, or user program, is built-up entirely in the programming station and it is compiled in machine language by means of a dedicated compilation program, that can be used by an user. The device allows changes to be made with simple operations to the program for controlling the actuators. In fact a program that becomes out-of-date can be replaced, changed or updated partially or wholly by connecting the device to the programming station. A user is capable of writing a new control program in high-level language, with the help of a graphic construction. This new control program is compiled in machine language in the same programming station and is sent to the control device that memorizes it in the memory unit that can be updated during operations and proceeds to execute it. Any changed or added functions are thus integrated automatically in the control program without it being necessary to make changes to the permanent memories included in the hardware of the device.

The compilation program can also be updated easily by the user by means of new versions contained on magnetic supports, memory cards and such like, to be inserted in the programming station. This can be done with easy and program-guided operations.

Another advantage of the device according to the invention is that the microprocessor device is capable of directly executing the control program of the actuators because it is completely compiled in machine language in the programming station and does not comprise high-level language instructions. This involves a reduction in the time of execution of the control program with respect the to known devices, for the same complexity of the program, because the control program is in machine language and does not need to be interpreted.

Features and advantages of the invention will be illustrated with reference to embodiments, represented as non-limiting examples, in the enclosed drawings, wherein:
Fig. 1 shows a block diagram of a microprocessor control device and of a flexible programming station, accomplished according to the invention;
Fig. 2 shows a flow diagram of a program for the compilation of a control program composed in the programming station of Fig. 1;
Fig. 3 shows a flow diagram of a program for the retrieval of a control program memorized in the device of Fig. 1;
Fig. 4 shows a flow diagram of auxiliary programs of the control program of Fig. 2;
Fig. 5 shows a flow diagram of a communications program memorized in the device of Fig. 1;
Fig. 6 shows an application of a control device according to the invention for the operation of a group of intelligent devices installed in a civil environment and connected together through serial communication lines;
Fig. 7 shows a card of a control device of the type of that of Fig. 1.

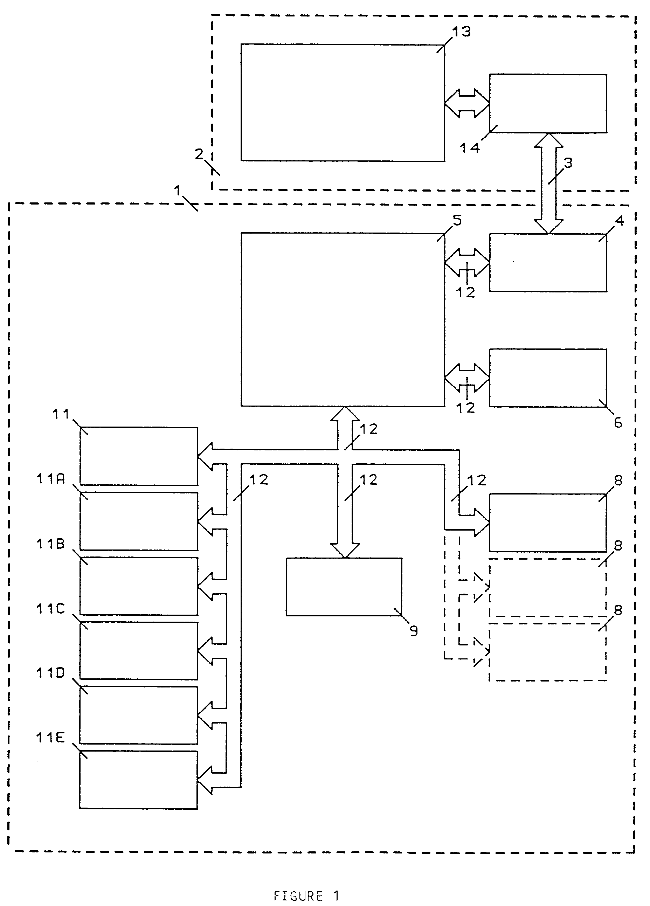

There are represented in Fig. 1 with a dashed line a block 1 that illustrates a microprocessor control device and a block 2 that illustrates a flexible programming station, or platform, connected to the device 1 by means of a two-way connecting line 3.

The device 1 comprises a two-way communications interface 4, a central microprocessor unit 5, an electrically-programmable read-only memory (EPROM) unit 6 containing a program for running communications (firmware) between the device 1 and the programming station 2. The device 1 also comprises an electrically-programmable and erasable memory unit 8, wherein there is memorized a program for the control of actuators and transducers (user program) in machine language, that can be executed by the microprocessor 5. The memory unit 8 can be of the FLASH EPROM, EEPROM, permanently-powered RAM or buffered RAM type. The device 1 can comprise other memory units 8, as represented with a dashed line. The device 1 also comprises a generic input and output unit 9 used for the operation of digital inputs and outputs, and drivers 11, 11A, 11B, 11C, 11D, 11E of actuators and transducers of industrial processes. In the specific case, the driver 11 is of a generic type, the driver 11A is that of an axis-control device to drive a positioning slave through electric motors, the driver 11B is that of a temperature control device, the driver 11C is that of an analog/digital conversion unit, the driver 11D is that of an digital/analog conversion unit and the driver 11E is that of a pulse-amplitude modulation unit.

The device 1 can comprise one only or some of the drivers indicated above, as well as other drivers of actuators or transducers of a type other than those mentioned.

The microprocessor unit 5 is connected, through two-way connecting lines 12, to the two-way communications interface 4, to the memory units 6 and 8, to the input and output unit 9 and to the drivers 11, 11A, 11B, 11C, 11D, 11E.

The two-way communications interface 4 can be of a serial type (for example RS232 and RS485), parallel, dedicated or custom and such like. The interface 4 comprises essentially a series of logic circuits used to transmit and to receive data from the memory unit 8 through the microprocessor 5.

The microprocessor unit 5 is of the commercial type and controls the operation of the drivers 11, 11A, 11B, 11C, 11D, 11E through the control program memorized in the memory 8, in a manner that will be illustrated later.

The memory unit 6 contains the program (firmware) capable of establishing a communications procedure between the device 1 and the programming station 2.

The memory unit 8 (FLASH EPROM, EEPROM or permanently-powered RAM or buffered RAM) can be updated and it contains the program for controlling the drivers 11, 11A, 11B, 11C, 11D, 11E, generated in the programming station 2.

The control program is compiled in machine language, or low-level language, using a compilation program memorized in the programming station 2. The compilation program allows a user to select the structure of the control program he deems to be the most suitable for operating the driver of the actuator 11 to execute a predetermined operative sequence of a process or operating cycle, as will be illustrated later. The control program is transmitted to the interface 4 and memorized in the memory unit 8 through the communication procedures activated by the microprocessor 5 with the help of the program (firmware) of the memory unit 6. Every time there is the need, a user can change and update the control program memorized in the unit 8 by connecting the device 1 with the station 2 through the line 3 and using the compilation program memorized in the station 2.

The programming station 2 comprises a processing unit 13 connected to the device 1 through an interface 14. The processing unit 13 can consist in a personal computer, a work station, a machine with dedicated or custom hardware and such like, not illustrated in detail because they are of a commercial type.

In a non-volatile memory of the processing unit 13 there is a compilation program that allows the user to compose the control program of the device 1 in machine language, proceeding in an interactive manner by means of video, keyboard and mouse of unit 13.

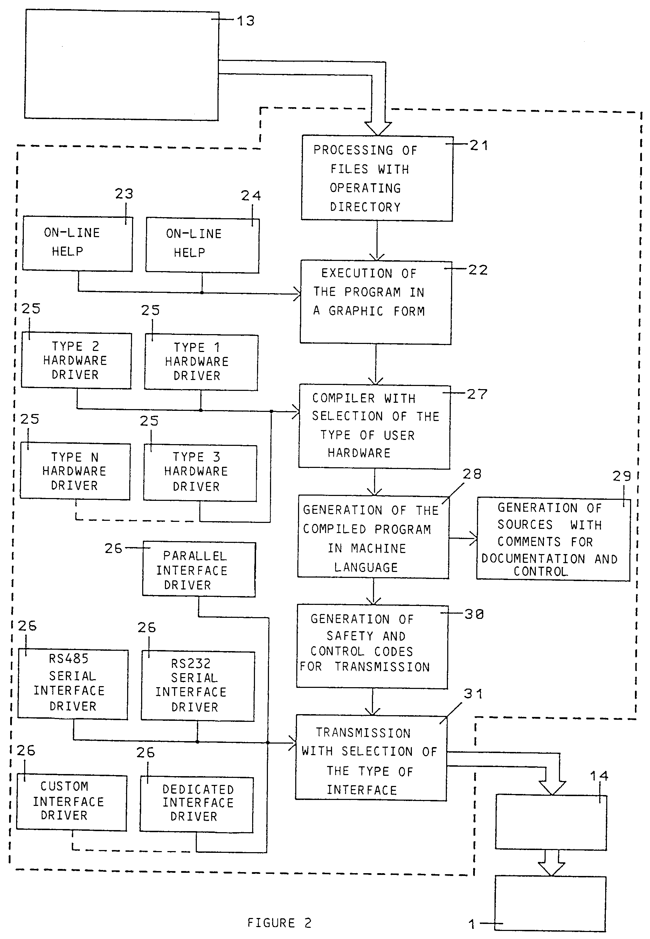

The flow diagram of the compilation program memorized in the processing unit 13 is illustrated in Fig. 2. Access to the compilation program is carried out through block 21 that allows the processing of files through an operating directory. The program contains certain sub-programs that can be selected and combined at will by a user (block 22). These are sub-programs that allow the composition of a program for the control of drivers of predetermined actuators in a graphic form: the construction of the control program in the form of flow diagrams, the construction of logic gate diagrams, the writing of Boolean equations, the construction of contact diagrams, the execution of primary mathematical functions, for example: addition, subtraction, multiplication, division, complex mathematical functions, for example: PID (proportional, integral, differential), complex functions, for example: generation of functions, specific functions, for example: axis control and such like.

The user selects the sub-programs that allow him to compose a given control program in high-level language (block 22) through an on-line help of the manual of the components of the control unit 1 (block 23), used to provide the user with all the specifications of each function, and through an on-line help function for the operation of the programming station (block 24).

The compilation program comprises sub-programs that are capable of generating first virtual software drivers representative of actual drivers (blocks 25) and second virtual software drivers representative of actual two-way communications interfaces (blocks 26).

The control program in high-level language is composed (block 27) after having selected a virtual driver (block 25) in relation to the characteristic data of the device 1 inserted by the user.

From the control program in high-level language a control program in machine language is compiled (block 28) and together with it a control documentation is generated (block 29).

The compilation program also produces a header file comprising identification bytes or words (for example numbers). Each high-level language instruction is associated to respective identification bytes (one or more). In turn, the identification byte are associated to respective machine language instructions. Thus, such identification bytes allow to compile the control program comprising only machine language instructions. In the meantime, said identification bytes allow to decompile the machine language instructions which are retrieved from the microprocessor device 1, when desired. In such a case, a decomplilation program which is in the programming station 2, as described afterwards, takes the identification bytes one or more at a time and, from the value of the bytes, identifies the corresponding machine language instructions in order to convert them in a high-level language instruction.

The compilation program is capable of generating safety and control codes for the transmission of the program in machine language from station 2 to device 1 (block 30).

The transmission of the program in machine language is executed (block 31), selecting a virtual driver (block 26) in relation to the characteristic data of the interface 4 inserted by the user.

The control program in machine language is sent by the interface 4 to the microprocessor 5 that proceeds to memorize it in the memory unit 8.

The memorized control program is used by the microprocessor unit 5 to operate the driver of the actuator 11 to execute the operative sequence of the process or of the operating cycle selected.

In the non-volatile memory of station 2 there is also memorized a retrieval program that allows a user to retrieve the control program memorized in the memory 8 of the device 1.

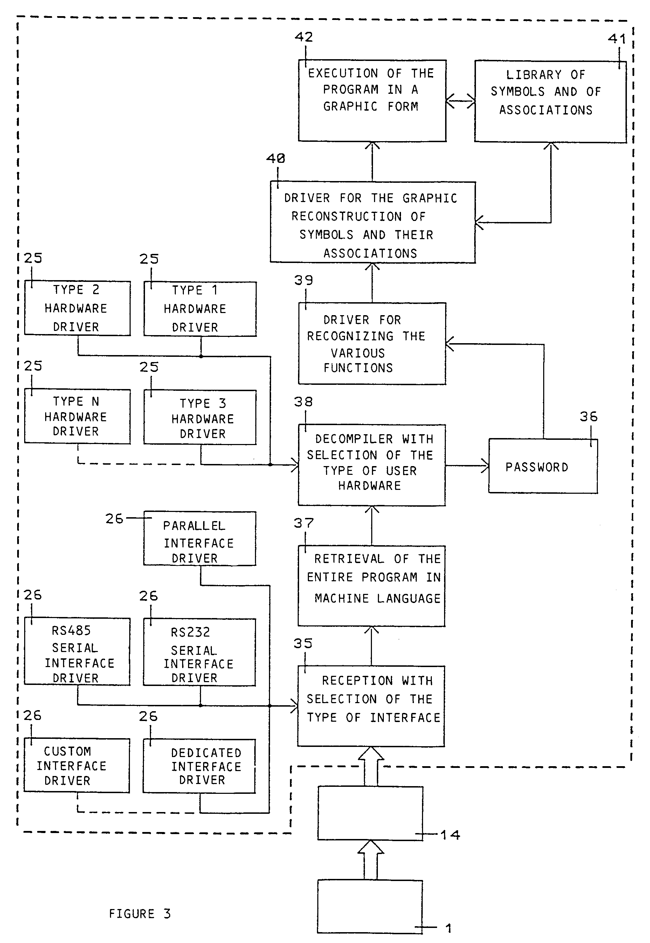

The flow diagram of the retrieval program memorized in station 2 is illustrated in Fig. 3. The retrieval program is activated by a reception instruction (block 35), after having selected a virtual driver in relation to the characteristic data of the interface 4 inserted by the user, by means of the sub-program for the generation of virtual drivers for interfaces (software drivers) (blocks 26).

With the insertion of a predetermined password (block 36), the entire retrieved control program in machine language (block 37) is decompiled in high-level language accessible by a user (block 38), selecting a virtual driver in relation to the characteristic data of the device 1, by means of the sub-program for the generation of virtual drivers (software drivers) (blocks 25).

According to the virtual driver of the actuator generated by the program, the decompiler will use certain further virtual drivers (software drivers) for rebuilding the functions of the control program in high-level language (block 39).

Through virtual drivers for the graphic reconstruction of symbols, the decompiler is also capable of rebuilding graphic libraries to be used for the graphic representation of the program (block 40).

Using the libraries of symbols (block 41) the decompiler executes the graphic program that allows the control program to be returned to the graphic form selected by the user (block 42).

As described before, the decomplilation program decodes the machine language instructions of the control program by identifying the machine language instructions through the respective identification bytes of the header file and then by associating said identification bytes to the respective high-level language instructions in order to convert the machine language instructions in high-level language instructions.

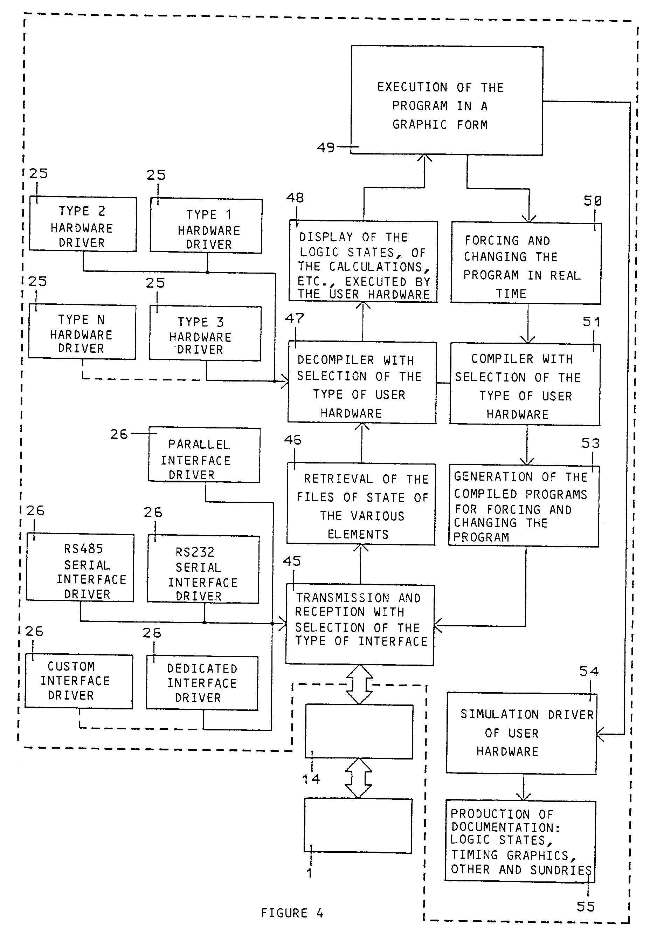

There is shown in Fig. 4 a flow diagram of auxiliary programs for monitoring, debugging and simulation, memorized in the permanent memory of the station 2.

The monitoring program allows the display to be made of the logic state of preselected components of the device 1 or of the calculations executed by the microprocessor 5 during the course of the control program or other similar functions.

The monitoring program starts with the request for the transmission of the data related to preselected files of state (block 45), after a virtual driver has been selected in relation to the characteristic data of the interface 4 inserted by the user, by means of the sub-program for the generation of virtual interface drivers (blocks 26).

The monitoring program allows the retrieval of the logic state of files of state in machine language (block 46) and to decompile it in high-level language (block 47), selecting a virtual driver in relation to the characteristic data of the device 1, by means of the sub-program for the generation of virtual drivers for actuators (blocks 25). Through the decompiled logic state a graphic display program is executed (block 48) that can be displayed by the user (block 49).

The debugging program allows the control program to be updated in real time. The debugging program is compiled by the user in a graphic form (bock 49) and is processed in high-level language (block 50). The debugging program is compiled in machine language (block 51), after a virtual driver has been selected in relation to the characteristic data of the device 1, by means of the sub-program for the generation of virtual drivers (blocks 25).

Forcing and change instructions of the control program are also generated in machine language (block 50) and the debugging program is transmitted to the interface 4, after a virtual driver has been selected in relation to the characteristic data of the interface 4 inserted by the user, by means of the sub-program for the generation of virtual interface drivers (blocks 26).

The simulation program is executed when the device 1 is not connected to the station 2.

The simulation program is composed by the user in a graphic form (block 49) and is made to operate using virtual drivers (software drivers) that simulate preselected components of the device 1, such as the microprocessor 5 and the driver of the actuator 11 (block 54). Control documentation (block 55) is also produced for the simulation program.

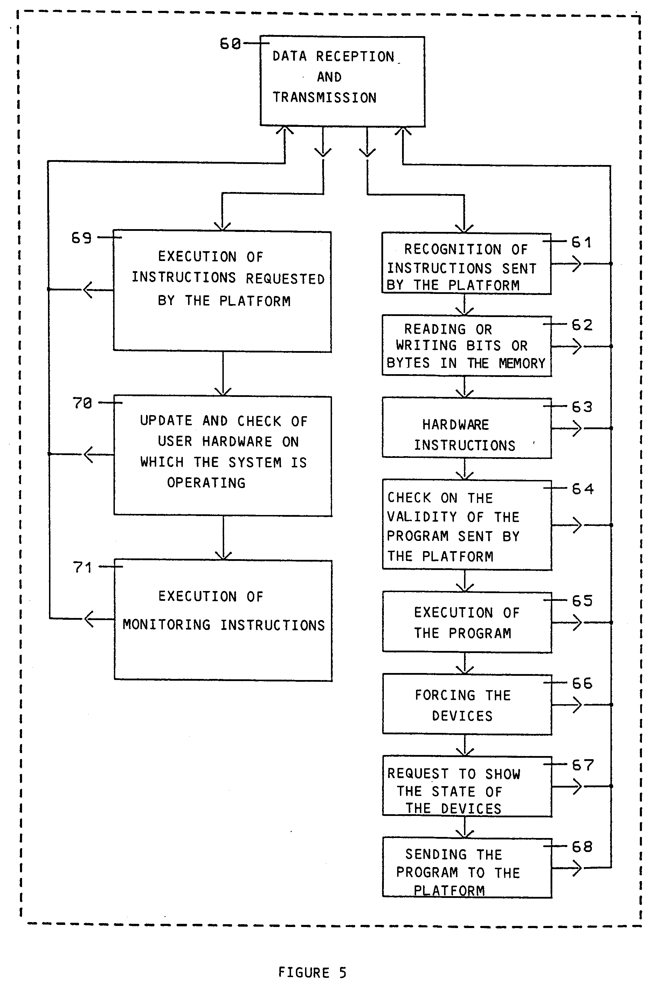

There is represented in Fig. 5 a flow diagram that shows the functions executed by the program (firmware) memorized in the memory unit 6 to operate the microprocessor to execute the communications procedure.

The microprocessor 5 is instructed for receiving and transmitting data (block 60) and in particular (i) it is capable of recognizing instructions sent by the programming station 2 (block 61), (ii) it is capable of executing the writing and reading of bytes or bits in the memory unit 8 (block 62), (iii) it receives and transmits instructions for the operation of certain components of the device 1 (block 63), (iv) it checks the validity of the control program sent by the programming station 2 (block 64), (v) it commands the execution of the control program (block 65), (vi) it commands the execution of the debugging program sent by the station 2 (block 66), (vii) it commands the execution of the monitoring program sent by said station 2 (block 67) and (viii) it commands the execution of the retrieval program requested by station 2 (block 68).

In addition, the program allows the microprocessor 5 to execute any type of instruction sent by station 2 (block 69), to update and check the components of device 1 (block 70) and to execute monitoring instructions of device 1 (block 71).

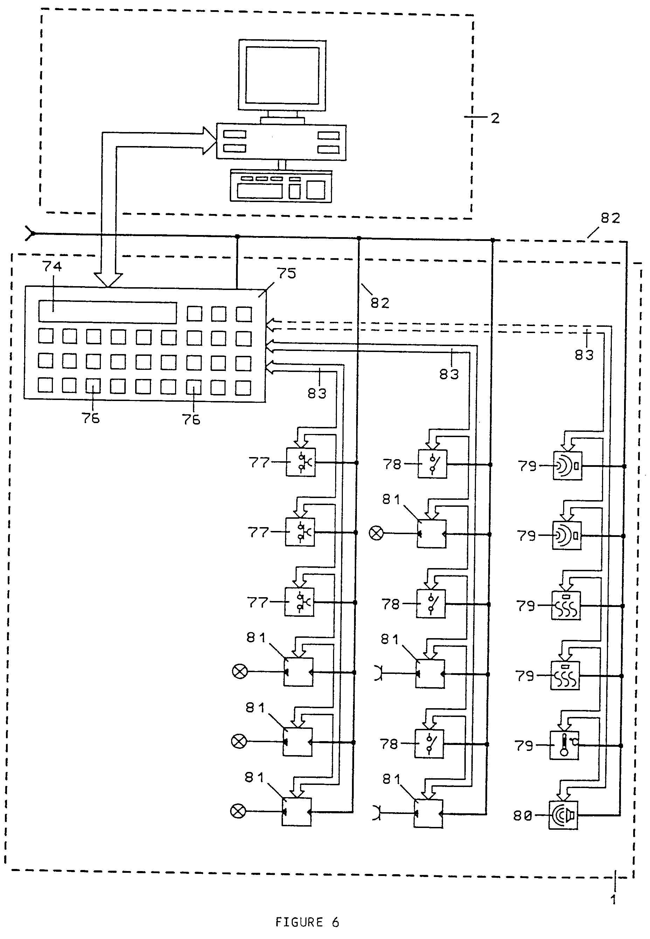

There is shown in Fig. 6 an application of the device according to the invention to a user consisting of a civil environment wherein an electrical circuit is installed provided with keys, switches, line control devices, sensors and many warning devices operatively connected to a control panel. All the actuators are of the intelligent (programmable) type.

In this case the programming station 2 consists of a personal computer and the device 1 comprises a control panel 75 for the control of the drivers of the actuators of the electrical circuit: drivers of keys 77, drivers of switches 78, drivers of sensors 79, such as infrared sensors, gas sensors and temperature sensors, drivers of acoustical warning devices 80 and drivers 81 for operating and supervising loads.

An electrical power supply line 82 is connected to the drivers 77-81 and to the control panel 75 and two-way communications lines 83 of the serial type (RS 485) connect the panel 75 and the drivers 77-81.

The panel 75 incorporates an erasable and programmable read-only (FLASH EPROM, EEPROM or permanently-powered RAM or buffered RAM) memory unit, that can be updated during operations, wherein a program for the control of the drivers 77-81 in machine language is memorized. The control program contained in the memory unit examines the state of all the drivers through one or more serial lines 83. Such program is composed by a user and compiled in station 2 through the compilation program of Fig. 2.

The operation of a key or of a switch of the drivers 77 and 78 by a user activates the control program that commands the operation of the driver 81 associated with it, or it tests the state of a sensor 79, and, in relation to this, operates the corresponding acoustical warning device 80.

The panel 75 is also provided with keys 76 and with a display 74. Thanks to these, a user can execute many functions, for example diagnostics of the various drivers, programming of times, display of messages and such like.

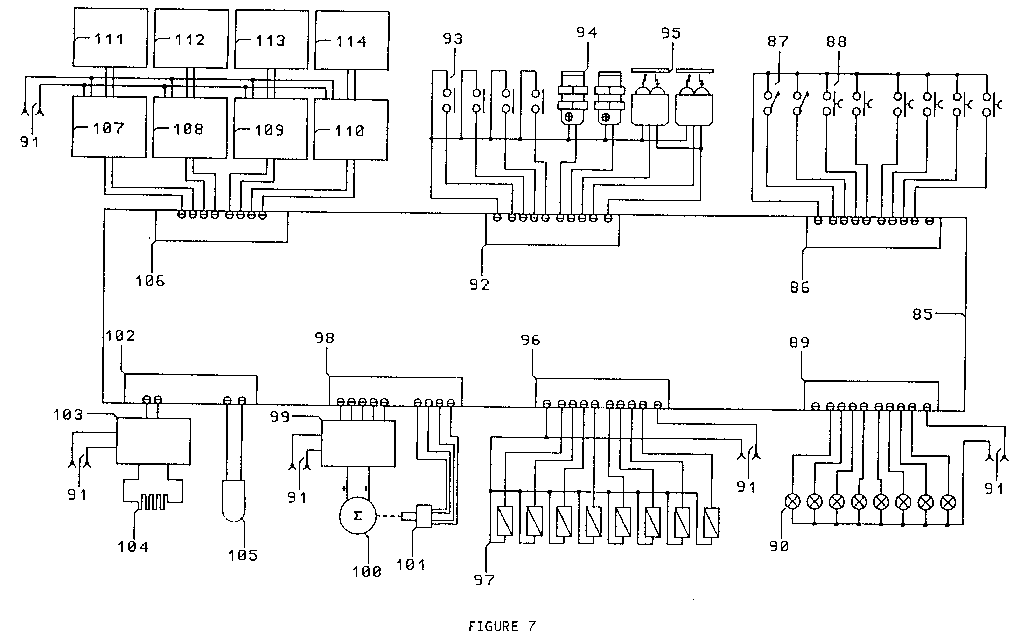

There is shown in Fig. 7 a card 85 of a control device similar to the device 1.

The card 85 contains interfaces connected to the two-way connection lines 12 of the microprocessor 5 and to the drivers of actuators and transducers of industrial processes. An input interface 86 is connected to switches 87 and keys 88 availale to the user for operating the control device. An interface 89 is connected to pilot lights 90, powered by the line 91. An interface 92 is connected to mechanical limit switches 93, to proximity limit switches 94 and to photocells 95. An interface 96 is connected to solenoid valves 97 powered by the line 91. An interface 98 (device for axis control) is connected to a power stage 99, powered by the line 91, of an electric motor 100 and to an incremental encoder 101, in turn operatively connected to the motor 100. An interface 102 (temperature control device) is connected to a power stage 103, powered by the line 91, of a heater 104 and to a temperature probe 105. An interface 106 is connected to amplifiers 107-110, powered by the line 91, in turn connected to a delivery transducer 111, to a pressure transducer 112, and to load cells 113 and 114, respectively.

## Claims

1. A device (1) for controlling at least one actuator, operatively connectable to a flexible programming station (2), comprising
- a central microprocessor unit (CPU) (5),
- a two-way communications interface (4) and
- at least one driver (11, 11A-11E) capable of driving at least one actuator, operatively connected to said central microprocessor unit (5),
- at least one first programmable and erasable memory unit (8), updatable during operations, and
- a second permanent memory unit (6), operatively connected to said central microprocessor unit (5),
- said interface (4) being capable of receiving a main control program and memorization instructions, both generated by said programming station (2) in machine language, said main control program being compiled in said programming station (2) to instruct said driver (11, 11A-11E) of said actuator to execute a predetermined operative sequence, said memorization instructions being transmitted to said interface (4) to write in said first memory unit (8) said main control program in machine language,
characterized in that
- in said second permanent memory unit (6) there is memorized only a communication program capable of establishing a communication procedure between said device and said programming station.

2. A device (1) according to claim 1, characterized in that said interface (4) is capable of receiving from said programming station (2) a retrieval program for retrieving from said first memory unit (8) said main control program memorized in machine language and for transmitting said main control program to said programming station (2) so that it is decompiled in high-level language and displayed in a selected graphic form.

3. A device (1) according to claim 1, characterized in that said interface (4) is capable of receiving from said programming station (2) a monitoring program to check the state of said driver of an actuator (11, 11A-11E).

4. A device (1) according to claim 1, characterized in that said interface (4) is capable of receiving from said programming station (2) a debugging program for changing and forcing said main control program.

5. A device (1) according to claim 1, characterized in that said second memory unit (6) is programmed to instruct said microprocessor control unit (5) to receive and to transmit data (block 60) and, in particular, (i) to recognize instructions sent by said programming station (2) (block 61), (ii) to execute the writing and reading of bytes or bits in said first memory unit (8) (block 62), (iii) to receive and to transmit instructions for the operation of certain components of said device (1) (block 63), (iv) to check the validity of said control program sent by said programming station (2) (block 64), (v) to command the execution of said control program (block 65), (vi) to command the execution of said debugging program sent by said station (2) (block 66), (vii) to command the execution of said monitoring program sent by said station (2) (block 67) and (viii) to command the execution of said retrieval program requested by said station (2) (block 68).

6. A device (1) according to claim 1, characterized in that said programming station (2) is programmed
- to combine predetermined programs for controlling at least one driver (11, 11A-11E) of a predetermined actuator operating in an interactive manner with a user and to build said main control program in high-level language,
- to program-generate first virtual drivers representative of actual drivers (11, 11A-11E),
- to process said main control program in high-level language and to compile said main control program in machine language, selecting a first virtual driver in relation to characteristic data of said at least one driver (11, 11A-11E),
- to program-generate second virtual drivers representative of actual two-way communications interfaces (4) and
- to transmit said main control program in machine language to said two-way communications interface (4), selecting a second virtual driver in relation to characteristic data of said interface (4).

7. A device (1) according to claim 6, characterized in that said programming station (2) is programmed
- to display in a predetermined graphic form said main control program in high-level language.

8. A device (1) according to claim 6, characterized in that said programming station (2) is programmed
- to retrieve from said first memory unit (8) said main control program in machine language, selecting said second virtual driver,
- to send a predetermined password to said two-way communications interface (4),
- to retrieve said main control program in machine language from said first memory unit (8) through said interface (4),
- to decompile said main control program in machine language and to rebuild said main control program in high-level language accessible to said user, selecting said first virtual driver.

9. A device (1) according to claim 6, characterized in that said programming station (2) is programmed
- to change and force said main program, compiling an auxiliary program in machine language in relation to said first virtual driver, and
- to transmit said auxiliary program to said interface (4).

10. A device (1) according to claim 6, characterized in that said programming station (2) is programmed
- to simulate said main control program so as to test operative conditions of said driver (11, 11A-11E) of said actuator.
